# EUROPÄISCHE PATENTSCHRIFT

(11) **EP 0 435 966 B1**
(45) Veröffentlichungstag und Bekanntmachung des Hinweises auf die Patenterteilung: **19.01.1994**
(21) Anmeldenummer: 90904769.8
(22) Anmeldetag: 30.03.1990
(51) Int. Cl.: F23G 5/02, F23C 1/00, F23C 9/00, F22B 31/04, F23G 5/46, F23G 5/08

(54) **VERFAHREN ZUR VERWERTUNG VON ABFALLSTOFFEN SOWIE EINRICHTUNG ZUR AUFBEREITUNG SOLCHER STOFFE**
PROCESS FOR SALVAGING WASTE AND DEVICE FOR PREPARING SAID WASTE
PROCEDE DE RECYCLAGE DE DECHETS ET DISPOSITIF POUR LES PREPARER

(30) Priorität: 15.04.1989 DE 3912450
(43) Veröffentlichungstag der Anmeldung: 10.07.1991
(73) Patentinhaber: SAARBERGWERKE AKTIENGESELLSCHAFT, 66104 Saarbrücken (DE); SIEMENS AKTIENGESELLSCHAFT, 80333 München (DE)
(72) Erfinder: SCHOLL, Gerhard, D-6683 Spiesen-Elversberg (DE); PETZEL, Hans-Karl, D-6601 Scheidt (DE); STADIE, Lothar, D-8552 Höchstadt (DE)
(86) Internationale Anmeldenummer: DE9000253
(87) Internationale Veröffentlichungsnummer: WO9012986

(56) Entgegenhaltungen:
- US-A- 3 670 669
- Combustion, Band 44, Nr. 4, Oktober 1972, (New York, US), F.E. Wisley et al.: "Use of refuse as fuel in an existing utility boiler", Seiten 38-41
- Patent Abstracts of Japan, Band 2, Nr. 151, 18. Dezember 1978, & JP-A-53118872 (BABCOCK HITACHI K.K.) 17. Oktober 1978

## Beschreibung

Die Erfindung betrifft ein Verfahren zur thermischen Verwertung von organische Bestandteile enthaltenden Abfallstoffen, wobei die Abfallstoffe im direkten Wärmetausch mit heißem Rauchgas getrocknet und sowohl das bei der Trocknung anfallende Gasgemisch als auch das abfallstämmige Trockengut verbrannt werden, sowie eine Einrichtung zur thermischen Aufbereitung solcher Stoffe.

Die Entsorgung von organische Bestandteile enthaltenden Abfallstoffen, wie Hausmüll, Industriemüll u. ä., erfolgt derzeit in der Regel durch Verbringung auf Deponien oder durch Verbrennen. Das Deponieren des nicht spezifierten Abfalles ist sehr aufwendig und kann, sofern die Deponieflächen nicht entsprechend vorbereitet sind, zur Schaffung neuer Altlasten führen, die eine Gefahr u.a. für das Grundwasser darstellen können. Zudem wird aus genehmigungsrechtlichen Gründen das Erschließen neuer Deponien immer schwieriger. Auch steht das Deponieren von Müll oder Abfall in einem gewissen Widerspruch zu dem gesetzlichen Wiederverwertungsgebot von Abfallstoffen.

Eine Möglichkeit zur Vermeidung oder Verringerung von Deponieproblemen ist die thermische Verwertung von Abfallstoffen zur Erzeugung von Dampf und Elektrizität in einer Müllverbrennungsanlage.

Aus der US-A-3670669 ist ein Müllverbrennungsverfahren bekannt geworden, bei der das bei der Müllverbrennung anfallende heiße Rauchgas als Trockenmedium für den Müll eingesetzt und das bei der Trocknung anfallende Gasgemisch ebenso wie das Trockengut im Feuerungsraum der Müllverbrennungsanlage verbrannt wird. Für den Fall, daß Müll mit einem so geringen Heizwert eingesetzt wird, daß ohne zusätzliche Stützmaßnahmen der Betrieb der Verbrennungsanlage gefährdet wäre, wird darüber hinaus vorgeschlagen, zur Stützung der Feuerung in Einzelfällen einen Brennstoff mit hohem Heizwert, wie z.B. Gas, Öl oder auch Kohle, einzusetzen.
Trotz der vorgeschlagenen Verfeuerung auch von nicht abfallstämmigen Zusatzstoffen, wird in der bekannt gewordenen Anlage fast ausschließlich Müll verbrannt. Die Folge davon ist, daß der Ausbrand nach wie vor relativ inhomogen ist, was dazu führen kann, daß die unverbrannten Anteile in der Schlacke und in der Flugasche relativ hoch sind. Dieser unvollständige Ausbrand führt zu Geruchsproblemen auch bei der Asche und somit auch dazu, daß eine solche Asche im Vergleich zu der Asche beispielweise eines Steinkohlenkraftwerkes wesentlich problematischer zu entsorgen ist. Teilweise müssen diese Aschen mit einem hohen Kostenaufwand auf ferngelegene Sondermülldeponien verbracht werden. Zudem ist nicht auszuschließen, daß für den Fall, daß die Abfallstoffe organische oder auch anorganische Chlorverbindungen, wie z.B. polychlorierte Biphenyle (PCB), enthalten, aufgrund der unvollständigen Verbrennung hochtoxische Dioxine, wie z.B. polychlorierte Dibenzodioxine oder auch polychlorierte Dibenzofurane, entstehen können.

In Combustion, Band 44, Nr. 4, Oktober 1972, ist offenbart, daß es grundsätzlich möglich ist, außerhalb eines Kohlekraftwerkes vorbereiteten Müll in der Feuerung des Kraftwerkes mit zu verbrennen.

Der Erfindung liegt die Aufgabe zugrunde, ein einfaches, wirtschaftliches und umweltfreundliches Verfahren zur thermischen Verwertung von organische Bestandteile enthaltenden Abfallstoffen anzugeben. Weiterhin soll eine Einrichtung zur thermischen Aufbereitung solcher Abfallstoffe angegeben werden. Die erstgenannte Aufgabe wird bei einem Verfahren der eingangs genannten Art dadurch gelöst, daß als Rauchgas das Rauchgas aus der Feuerungszone eines Kohlekraftwerkes verwendet wird, daß die Verbrennung des Gasgemisches und des Trockengutes in der Feuerungszone des Kohlekraftwerkes erfolgt und daß bezogen auf die Gesamtmenge des Brennstoffes für die Feuerungszone des Kohlekraftwerkes der Anteil an Trockengut bei ≦ 20 % liegt.

Die zweitgenannte Aufgabe wird erfindungsgemäß gelöst durch eine Einrichtung, die gekennzeichnet ist durch einen einen Trockenraum enthaltenden Trockner mit
a) einer Förderschnecke zur Zuleitung der Abfallstoffe in den Trockenraum,
b) einer Leitung zur Zuleitung von heißem Rauchgas aus der Feuerungszone eines Kohlekraftwerkes in den Trockenraum,
c) einer Leitung zur Ableitung des im Trockenraum anfallenden Gasgemisches hin zur Feuerungszone des Kohlekraftwerkes und
d) einer Festgut-Förderstrecke zur Förderung von im Trockenraum anfallendem festem Trockengut hin zur Feuerungszone des Kohlekraftwerkes.

Durch die erfindungsgemäßen Maßnahmen gelingt es, die Vorteile einer Kohlefeuerungsanlage mit einem außerordentlich hohen Ausbrand und dementsprechend hohen Verbrennungswirkungsgraden, wie sie sich zum Beispiel in trocken- oder flüssigentaschten Dampferzeugern von Steinkohlenkraftwerken darstellen, auch für die Verbrennung von inhomogenen Abfallstoffen zu nutzen. Bei den hohen Verbrennungstemperaturen einer Kohlefeuerungsanlage von weit über 1000 °C werden auch bei der Verbrennung von relativ problematischen Abfallstoffen, wie Kunststoffen aller Art sowie PCB-haltigen Bestandteilen usw., umweltverträgliche Reaktionsprodukte erzeugt. Die Bildung von toxischen Dioxinen oder Furanen wird von vorneherein vermieden, oder aber derartige gegebenenfalls als Zwischenreaktionsprodukte anfallende Verbindungen werden bei den hohen Verbrennungstemperaturen mit Sicherheit wieder gespalten.

Die beiden aufgrund der vorliegend vorgesehenen Trocknung der Abfallstoffe anfallenden Fraktionen, nämlich das Trockengut und das brennbare Bestandteile enthaltende Gasgemisch, können im Gegensatz zu unbehandeltem Abfall ohne weiteres in einer hochwirksamen trocken- oder flüssigentaschten Kohlenfeuerungsanlage, beispielsweise in einem Steinkohlenkraftwerk, verbrannt werden. Das Trockengut kann gemeinsam oder auch getrennt von der Kohle auf die benötigte Korngutgröße aufgemahlen und dann über den oder die normalen, bereits im Kessel vorhandenen Brenner thermisch umgesetzt werden.

Zweckmäßigerweise sollte der anstelle von Kohle eingesetzte Anteil des Trockengutes bei kleiner/gleich 20 % bezogen auf die Gesamtbrennstoffmenge liegen. Es hat sich nämlich gezeigt, daß bei Trockengutanteilen in dem genannten Größenbereich bis 20 % die typischen Verbrennungsreaktionen einer Kohlenfeuerung nicht oder nur unwesentlich beeinflußt werden.

So ändert sich die Rauchgaszusammensetzung kaum. Die für den Einsatz unterschiedlicher Kohlensorten akzeptierte Bandbreite im Schadstoffgehalt des Rauchgases wird durch den dosierten Zusatz von Abfallbrennstoff zwischen 0 und 20 % auf keinen Fall überschritten. Dies trifft nicht nur auf die Schwefel- und Stickoxide im Rauchgas zu, sondern auch auf Chloride, Fluoride und insbesondere auch auf toxische Substanzen wie Dioxine und Furane. Solche Schadstoffe wie Dioxine und Furane konnten in durchgeführten Versuchen überhaupt nicht nachgewiesen werden.

Aufgrund des erfindungsgemäßen Vorschlages ist es ohne weiteres möglich, zum Beispiel in einem herkömmlichen Steinkohlenkraftwerk mit einer Leistung von 700 MW und einem jährlichen Steinkohlenverbrauch von rund l Mio. Tonnen jährlich rund 100.000 bis 200.000 t getrockneten Abfallbrennstoff ohne Einfluß auf den Betrieb des Kraftwerkes mitzuverbrennen.

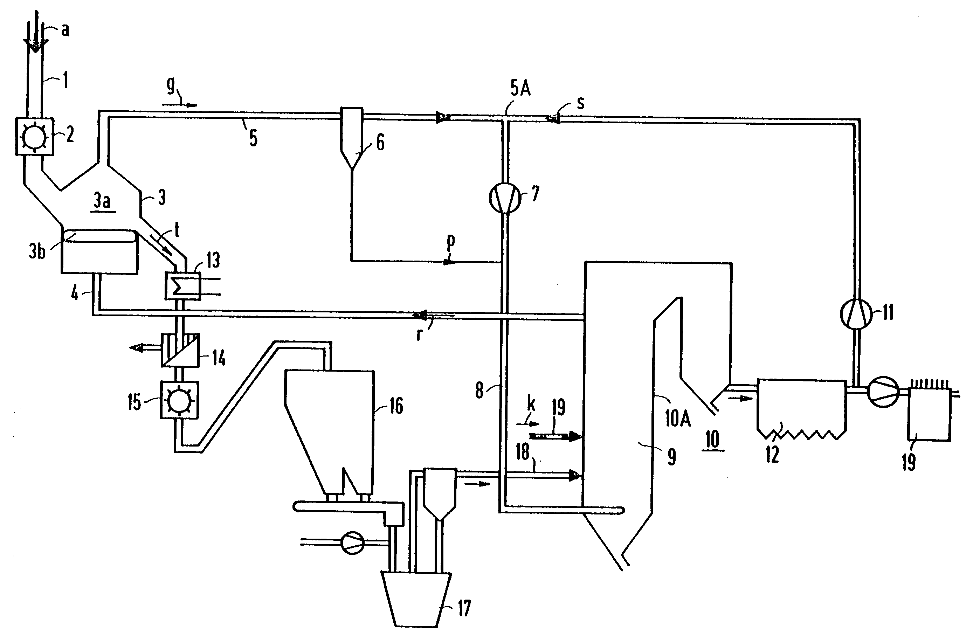

Zur weiteren Erläuterung wird auf das in der Figur schematisch dargestellte Ausführungsbeispiel Bezug genommen.

Gemäß der Figur wird von bereits aufgearbeiteten Abfallstoffen a mit organischen Bestandteilen ausgegangen, das heißt von Abfall, der einer Grobsortierung unterzogen wurde und aus dem wiederverwertbare Grobbestandteile, wie Glasflaschen, größere Metallstücke und ähnliches, abgetrennt wurden. Die Abfallstoffe a werden über eine Förderstrecke 1 zunächst einer Zerkleinerungseinrichtung 2, beispielsweise einer Rotorschere, zugeführt und dort auf eine vorgegebene Klassierung zerkleinert. Im Anschluß daran wird der Abfall a in den Trockenraum 3a eines Trockners 3 mit Siebboden, Rost oder Förderband 3b eingespeist. Die Abfalltrocknung erfolgt im direkten Wärmetausch mit noch nicht entstaubtem Rauchgas r eines Steinkohlekraftwerkes 10, welches bei einer Temperatur von ca. 800 °C über eine Leitung 4 und über den Siebboden 3b in den Trockenraum 3a des Trockners 3 eingeleitet wird. Durch Variation der Verweilzeit des Rauchgases r im Trockner 3 oder der Rauchgasmenge kann die Trocknungstemperatur auf ein vorgegebenes Niveau unter 800 °C eingestellt werden.

Insbesondere bei höheren Temperaturen werden dabei aus dem Rohabfall a neben dem Wasser auch bereits leichtflüchtige und meist geruchsintensive Substanzen ausgetrieben.

Das im Trockner 3 anfallende Gasgemisch g wird mittels eines Saugzuggebläses 7 über eine Leitung 5 aus dem Trockenraum 3a abgezogen und über eine Leitung 8 in die Trockenfeuerungszone 9 des Kessels 10A des Steinkohlekraftwerks 10 eingespeist. Der im Gasgemisch g mitgeführte Staub p wird zur Schonung des Saugzuggebläses 7 in einem Staubabscheider 6 abgetrennt und dann hinter dem Saugzuggebläse 7 erneut in das Gasgemisch g eingeleitet. Die Temperatur des Gasgemisches g aus dem Trockner 3 kann durch Zumischung eines kalten Rauchgasstromes s, welcher hinter dem Elektrofilter 12 des Kraftwerks 10 mittels eines Kühlgebläses 11 abgezogen und in einer Mischstelle 5A in der Leitung 5 beigemischt wird, auf eine für das Saugzuggebläse 7 verträgliche Arbeitstemperatur eingestellt werden.

Die brennbaren Bestandteile des Gasgemisches g werden in der Trockenfeuerungszone 9 bei den hier vorherrschenden Temperaturen vollständig und umweltfreundlich verbrannt.

Das im Trockenraum 3a des Trockners 3 anfallende feste Trockengut t wird auf einer Festgut-Förderstrecke 18 zunächst in einem Röstgutkühler 13 abgekühlt, dann in einem Magnetabscheider 14 einer Metallabscheidung unterzogen, sodann in einer Hammermühle 15 zerkleinert und schließlich in einem Trockengutbunker 16 zwischengelagert. Aus dem Trockengutbunker 16 passiert das Trockengut t eine Schlägermühle 17 mit zugeordnetem Gebläse, in der eine Aufmahlung auf ein für die Kraftwerksfeuerung verträgliches Korngrößenband erfolgt. Das aufgemahlene Trockengut t wird dann am Ende der Förderstrecke 18 zum Beispiel über ein Förderband zusammen mit der Kohle k, welche über eine weitere Förderstrecke 19 zugeführt wird, in der Trockenfeuerungszone 9 verbrannt. Der Anteil an Trockengut t bezogen auf die Gesamtmenge an Brennstoff k der Kohlenfeuerungsanlage 10 sollte bei höchstens 20 % liegen. Ebenso wie bei dem Gasgemisch g aus dem Trockner 3 erfolgt die Verbrennung des Trockengutes t in der Feuerungszone 9 bei hohen Temperaturen vollständig und umweltfreundlich.

Das bei der Verbrennung der Abfallkomponenten g und t anfallende Rauchgas durchströmt zusammen mit dem kohlestämmigen Rauchgas den Kessel 10A, dann das Elektrofilter 12 und schließlich über ein Gebläse eine Rauchgasentschwefelungsanlage 19. Es wird dann in die Atmosphäre abgeleitet.

Wie das vorliegende Ausführungsbeispiel zeigt, sind für die Aufarbeitung von abfallstämmigem Rauchgas und Flugasche keine gesonderten Einrichtungen erforderlich. Vielmehr kann in einfacher und wirtschaftlicher Weise die vorhandene Infrastruktur des Steinkohlekraftwerkes 10 genutzt werden.

Falls es sich bei dem vorhandenen Steinkohlekraftwerk 10 um ein Kraftwerk mit einem Flüssigascheabzug handelt, wird die in der Feuerung 9 anfallende abfallstämmige Asche mit der Asche der Kohle k eingeschmolzen. Das nach Abkühlung entstehende Granulat kann ebenso wie das Granulat einer Kohlefeuerung alleine für die üblichen Zwecke in der Bauindustrie genutzt werden.

## Patentansprüche

1. Verfahren zur thermischen Verwertung von organische Bestandteile enthaltenden Abfallstoffen, wobei die Abfallstoffe im direkten Wärmetausch mit heißem Rauchgas getrocknet und sowohl das bei der Trocknung anfallende Gasgemisch als auch das abfallstämmige Trockengut verbrannt werden, dadurch gekennzeichnet, daß als Rauchgas das Rauchgas aus der Feuerungszone eines Kohlekraftwerkes verwendet wird, daß die Verbrennung des Gasgemisches und des Trockengutes in der Feuerungszone des Kohlekraftwerkes erfolgt und daß bezogen auf die Gesamtmenge des Brennstoffes für die Feuerungszone des Kohlekraftwerkes der Anteil an Trockengut bei ≦ 20 % liegt.

2. Verfahren nach Anspruch 1, dadurch gekennzeichnet, daß das Trockengut zusammen mit Kohle der Feuerungszone des Kohlekraftwerkes zugeführt wird.

3. Einrichtung zur Durchführung des Verfahrens nach Anspruch 1, gekennzeichnet durch einen einen Trockenraum (3a) enthaltenden Trockner (3) mit
a) einer Förderschnecke (1) zur Zuleitung der Abfallstoffe (a) in den Trockenraum (3a),
b) einer Leitung (4) zur Zuleitung von heißem Rauchgas (r) aus der Feuerungszone (9) eines Kohlekraftwerkes (10) in den Trockenraum (3a)
c) einer Leitung (5, 8) zur Ableitung des im Trockenraum (3a) anfallenden Gasgemisches (g) hin zur Feuerungszone (9) des Kohlekraftwerkes (10) und
d) einer Festgut-Förderstrecke (18) zur Förderung von im Trockenraum (3a) anfallendem festem Trockengut (t) hin zur Feuerungszone (9) des Kohlekraftwerkes (10).

4. Einrichtung nach Anspruch 3, dadurch gekennzeichnet, daß in der Förderstrecke (1) eine Zerkleinerungseinrichtung (2) angeordnet ist.

5. Einrichtung nach einem der Ansprüche 3 oder 4, dadurch gekennzeichnet, daß die Leitung (5, 8) zur Ableitung des Gasgemisches (g) eine Mischstelle (5A) zur Beimischung von vergleichsweise kaltem Rauchgas (s) aus der Feuerungszone (9) des Kohlekraftwerkes (10) enthält.

6. Einrichtung nach einem der Ansprüche 3 bis 5, dadurch gekennzeichnet, daß das Kohlekraftwerk (10) ein Steinkohlekraftwerk ist.

## Claims

1. A process for the thermal utilization of waste materials containing organic constituents, wherein the waste materials are dried in direct heat exchange with hot flue gas and both the gas mixture produced by the drying and the dry material derived from the waste are burned, characterised in that the flue gas from the combustion zone of a coal power plant is used as flue gas, that the burning of the gas mixture and the dry material takes place in the combustion zone of the coal power plant, and that the proportion of dry material relative to the total quantity of fuel for the combustion zone of the coal power plant is ≦ 20%.

2. A process as claimed in Claim 1, characterised in that the dry material is supplied together with the coal to the combustion zone of the coal power plant.

3. A device for implementing the process claimed in Claim 1, characterised by a drier (3) containing a drying chamber (3a) with
a) a worm conveyor (1) for supplying the waste materials (a) to the drying chamber (3a),
b) a pipeline (4) for supplying hot flue gas (r) from the combustion zone (9) of a coal power plant (10) to the drying chamber (3a),
c) a pipeline (5, 8) for conducting the gas mixture (g) produced in the drying chamber (3a) to the combustion zone (9) of the coal power plant (10) and
d) a solid material conveyor line (18) for conveying solid dry material (t) produced in the drying chamber (3a) to the combustion zone (9) of the coal power plant (10).

4. A device as claimed in Claim 3, characterised in that a comminuting device (2) is arranged in the conveyor line (1).

5. A device as claimed in one of Claims 3 or 4, characterised in that the pipeline (5, 8) for the discharging of the gas mixture (g) contains a mixing station (5A) for the admixing of comparatively cold flue gas (s) from the combustion zone (9) of the coal power plant (10).

6. A device as claimed in one of Claims 3 to 5, characterised in that the coal power plant (10) is a hard coal power plant.

## Revendications

1. Procédé d'exploitation thermique de déchets contenant des composants organiques, les déchets étant séchés avec des fumées chaudes par échange thermique direct et on brûle à la fois le mélange gazeux produit par le séchage que le produit sec provenant des déchets, procédé caractérisé en ce que comme fumée on utilise la fumée de la zone du foyer d'une centrale à charbon et la combustion du mélange gazeux et du produit sec se fait dans la zone du foyer de la centrale à charbon et en ce que rapportée à la quantité totale de combustible pour la zone du foyer de la centrale à charbon, la fraction représentée par les produits secs est inférieure ou égale à 20 % .

2. Procédé selon la revendication 1, caractérisé en ce que les produits secs et le charbon sont fournis à la zone du foyer de la centrale thermique à charbon.

3. Installation pour la mise en oeuvre du procédé selon la revendication 1, caractérisée par un séchoir (3) comprenant une chambre de séchage (3a) avec
a) une vis de transfert (1) pour fournir les déchets (a) à la chambre de séchage (3a),
b) une conduite (4) pour l'alimentation en fumée chaudes (r) provenant de la zone du foyer (9) de la centrale à charbon (10) dans la chambre de séchage (3a),
c) une conduite (5, 8) pour dévier le mélange gazeux (9) arrivant dans la chambre de séchage (3a) jusqu'à la zone du foyer (9) de la centrale à charbon (10) et
d) une vis de transfert pour les produits solides (18) pour transférer les produits secs, solides (t) produits dans la chambre de séchage (3a) jusque dans la zone du foyer (9) de la centrale à charbon (10).

4. Installation selon la revendication 3, caractérisée par une installation de concassage (2) prévue dans le chemin de transfert (1).

5. Installation selon l'une des revendications 3 ou 4, caractérisée en ce que la conduite (5, 8) pour dévier le mélange gazeux (g) comporte un point de mélange (5A) pour ajouter des fumées relativement froides (s) de la zone du foyer (9) de la centrale à charbon (10).

6. Installation selon l'une des revendications 3 à 5, caractérisée en ce que la centrale à charbon (10) est une centrale brûlant de la houille.
